# EUROPÄISCHE PATENTSCHRIFT

(11) **EP 1 800 967 B1**
(45) Veröffentlichungstag und Bekanntmachung des Hinweises auf die Patenterteilung: **18.06.2008**
(21) Anmeldenummer: 06024483.7
(22) Anmeldetag: 25.11.2006
(51) Int. Cl.: B60R 21/02

(54) **Kraftfahrzeug mit einer Befestigungseinrichtung für ein Trenn- bzw. Rückhalteelement**
Vehicle with a mounting device for a restraining or partition element
Véhicule équipé d'un dispositif d'arrimage pour un élement de séparation ou de retenue

(30) Priorität: 23.12.2005 DE 102005062380
(43) Veröffentlichungstag der Anmeldung: 27.06.2007
(73) Patentinhaber: Dr. Ing. h.c. F. Porsche Aktiengesellschaft, 71287 Weissach (DE)
(72) Erfinder: Gutschner, Andreas, 71706 Markgröningen (DE); Gayer, Benno, 71665 Vaihingen/Enz (DE); Luik, Klaus, 75417 Mühlacker (DE)

(56) Entgegenhaltungen:
- DE-A1- 10 309 173
- DE-A1- 19 748 595
- DE-U1- 29 918 825

## Beschreibung

Bei der Erfindung wird ausgegangen von einem Kraftfahrzeug mit einer Befestigungseinrichtung für ein Trenn- bzw. Rückhalteelement, gemäß Oberbegriff des Patentanspruchs 1.

Ein gattungsbildendes Kraftfahrzeug ist aus der DE 197 48 595 bekannt.

Ein weiteres Kraftfahrzeug ist aus der DE 299 18 825 U1 bekannt. Es besitzt einen Rohbauabschnitt, an dem über eine Befestigungseinrichtung ein Rückhalteelement, beispielsweise Gepäcknetz, gehalten werden kann. Die Befestigungseinrichtung umfasst hierfür ein Beschlagteil, das als Blechteil ausgeführt ist und einen Befestigungsabschnitt für eine Verbindung mit dem Rohbauabschnitt und einen Halteabschnitt aufweist. An dem Halteabschnitt, der hier als Öse ausgeführt ist, wird das Rückhalteelement eingehängt. Ferner ist dem Rohbauabschnitt ein Innenverkleidungsteil zugeordnet, das einen Durchbruch aufweist, in den eine Blende eingesetzt ist, die von dem Halteabschnitt durchgriffen wird. Die trichterförmige Blende greift an dem Innenverkleidungsteil an und stützt sich außerdem an dem Rohbauabschnitt ab. Wird an dem Halteelement ein Rückhalteelement eingehängt, können unter Umständen während der Fahrt Klappergeräusche entstehen.

Aufgabe der Erfindung ist es, ein Kraftfahrzeug der eingangs genannten Art mit einer Befestigungseinrichtung anzugeben, das diesen Nachteil nicht aufweist.

Gelöst wird diese Aufgabe mit einem Kraftfahrzeug mit einer Befestigungseinrichtung, das die in Anspruch 1 genannten Merkmale umfasst. Ausgestaltungen der Erfindung sind in den Unteransprüchen angegeben.

Die mit der Erfindung hauptsächlich erzielten Vorteile sind darin zu sehen, dass durch die erfindungsgemäßen Maßnahmen die Entstehung von Klappergeräuschen zumindest deutlich reduziert wird, da die Blende nicht mit dem Rohbauabschnitt in Berührung kommt und weil der Haken, an dem das Rückhalteelement eingehängt werden kann, durch die aufgesteckte Abdeckung abgeschirmt ist und nicht direkt mit dem Rückhalteelement in Berührung kommt. Die Blende verkleidet außerdem den Durchbruch in dem Innenausstattungsteil, so dass der Rohbauabschnitt verdeckt ist und lediglich der Haken zugänglich ist. Durch den Verlängerungsabschnitt zwischen dem Haken und dem Befestigungsabschnitt liegt außerdem das Rückhalteelement mit Abstand zum Rohbauabschnitt, so dass auch dadurch Klappergeräusche vermieden sein sollten. Überdies lassen sich Aufsteckteil und Blende im Reparaturfall einfach austauschen.

Gemäß einem in Anspruch 2 angegebenen Ausführungsbeispiel ist vorteilhaft, dass sich das Aufsteckteil problemlos auf den Haken aufstecken lässt. Zudem ist durch die erfindungsgemäße Wahl des Materials für das Aufsteckteil eine weitere Reduzierung von Klappergeräuschen möglich.

Ein weiteres _{.}Ausführungsbeispiel ist in Anspruch 3 angeführt, wonach die Blende einfach in den Durchbruch eingesetzt werden kann und außerdem die Entstehung von Klappergeräuschen weiter reduziert sind. Die Blende kann aus einem Elastomer oder Polypropylen oder ggf. als Zwei-Komponenten-Teit daraus hergestellt sein.

Eine einfache Befestigungsmöglichkeit für die Blende ist in nach Anspruch 4 und/oder 5 gegeben.

Entsprechend einer Weiterbildung nach Anspruch 6 ist vorteilhaft, dass der Halteabschnitt bzw. der Verlängerungsabschnitt so bemessen werden können, dass der Haken nicht über das Innenverkleidungsteil hervor steht, sondern innerhalb der Kalotte endet.

Ein entsprechend Anspruch 7 vorgesehener Kragen an dem Aufsteckteil verschließt den Durchbruch in der Blende.

Die Erfindung wird nachfolgend anhand eines Ausführungsbeispiels mit Bezug auf die Zeichnung näher erläutert. Es zeigen:
- Fig. 1: ausschnittweise ein Kraftfahrzeug mit einer Befestigungseinrichtung für ein Rückhalteelement,
- Fig. 2: einen Schnitt entlang der Linie ∥ - ∥ in Fig. 1,
- Fig. 3: eine vergrößerte Darstellung der Befestigungseinrichtung mit einem ersten Ausführungsbeispiel eines Aufsteckteils für die Befestigungseinrichtung nach Fig. 2,
- Fig. 4: ein zweites Ausführungsbeispiel eines Aufsteckteils in Vergrößerung,
- Fig. 5: eine Perspektive des Aufsteckteils und
- Fig. 6: eine Blende der Befestigungseinrichtung in einer Perspektive.

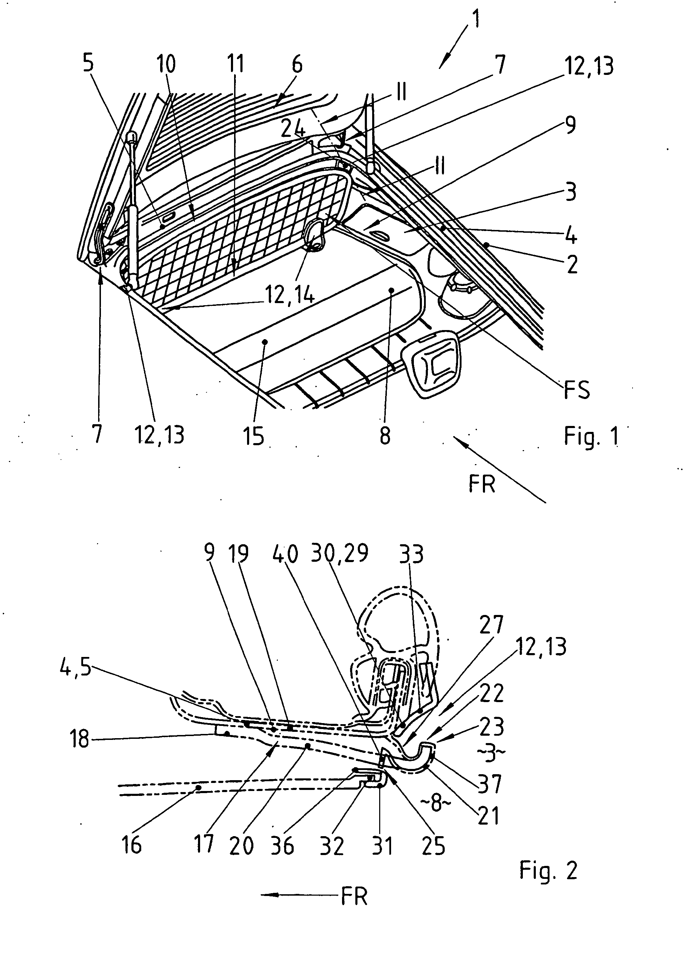

In Fig. 1 ist von einem Kraftfahrzeug 1 ausschnittweise eine Karosserie 2 mit einer Karosserieöffnung 3 zu sehen, die von einem Rohbauabschnitt 4 umgeben ist. An dem Rohbauabschnitt 4, insbesondere an einem quer verlaufenden hinteren Dachrahmen 5, ist ein Heckdeckel 6 schwenkbar über eine Scharniereinrichtung 7 befestigt, so dass der Heckdeckel 6 die Karosserieöffnung 3 verschließen oder - wie dargestellt - freigeben kann. Der Heckdeckel 6 verschließt einen Gepäckraum 8, der Bestandteil eines Fahrzeuginnenraums 9 ist, der im Übrigen einen Fahrgastraum 10 besitzt. Gepäckraum 8 und Fahrgastraum 10 sind über ein Trennelement 11 voneinander unterteilt, so dass im Gepäckraum 8 transportierte Gegenstände (nicht gezeigt) beispielsweise bei einem starken Bremsvorgang oder einem Unfall im Gepäckraum 8 zurück gehalten werden, so dass das Trennelement 11 auch als Rückhalteelement für Ladegut bezeichnet werden kann. Dabei ist das Trennelement 11 in einer aufrechten Funktionsstellung FS über eine Befestigungseinrichtung 12 fest gehalten bzw. mit dem Rohbau und insbesondere mit dem Rohbauabschnitt 4 sicher, jedoch lösbar verbunden. Die Befestigungseinrichtung 12 ist mehrteilig ausgeführt und besitzt vorzugsweise mehrere Befestigungsmittel 13 und 14, von denen zwei obere Befestigungsmittel 13 am Dachrahmen 5 angeordnet und zwei untere Befestigungsmittel 14 einem Gepäckraumboden 15 zugeordnet sind. Der Dachrahmen 5 ist an seiner dem Fahrzeuginnenraum 9 zugewandten Seite mit einem Innenverkleidungsteil 16 abgedeckt.

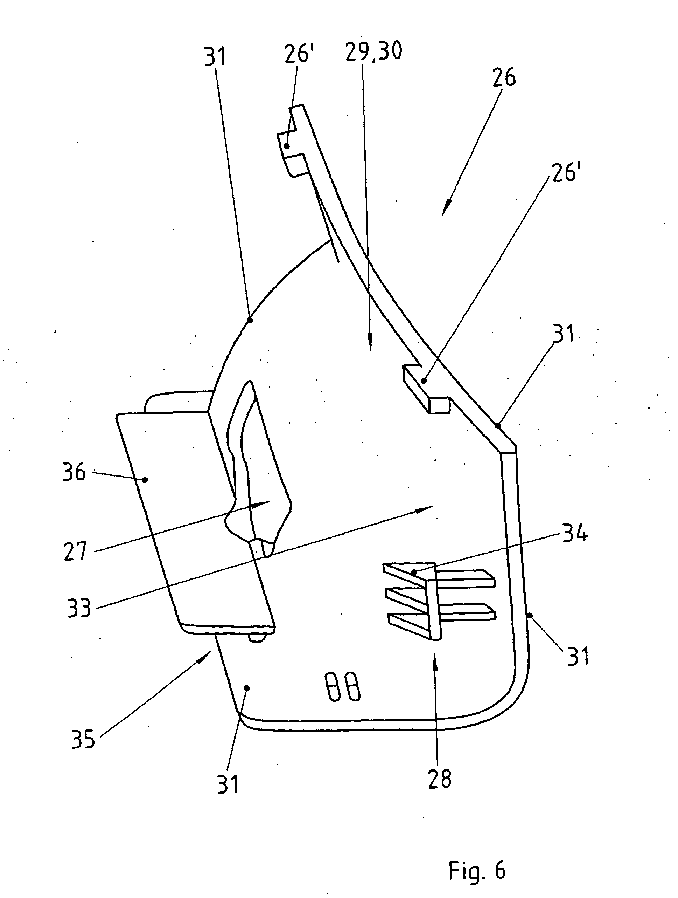

Die oberen Befestigungsmittel 13 der Befestigungseinrichtung 12 sind identisch ausgeführt und werden nachfolgend näher anhand der Fig. 2 bis 6 erläutert. Gleiche bzw. gleich wirkende Teile sind in sämtlichen Fig. 1 bis 6 mit denselben Bezugszeichen versehen. Das Befestigungsmittel 13 umfasst ein Beschlagteil 17, das mit einem plattenförmigen Befestigungsabschnitt 18 fest, beispielsweise durch Schweißen, am Rohbauabschnitt 4 und insbesondere an einer dem Fahrzeuginnenraum 9 zugewandeten Seite 19 des Dachrahmens 5 befestigt ist. Von dem Befestigungsabschnitt 18 geht ein streifenförmigen Verlängerungsabschnitt 20 aus, der ggf. leicht von der Seite 19 weg gebogen sich entgegen der Fahrtrichtung FR, also in Richtung Gepäckraum 8, erstreckt, und der in einen streifenförmigen Halteabschnitt 21 für das Trennelement 11 übergeht, der an seinem freien Ende 22 einen nach oben offenen Haken 23 trägt, an dem das Trennelement 11 mit einer Öse 24 (Fig. 1) eingehängt wird. Die Länge des Verlängerungsabschnitts 20 bzw. des Halteabschnitts 21 ist so bemessen, dass der Haken 23 über das Innenverkleidungsteil 16 nicht hervorsteht. Um den Halteabschnitt 21 herum ist in das Innenverkleidungsteil 16 ein Durchbruch 25 eingebracht, in den eine Blende 26 eingesetzt ist, die eine Durchgangsöffnung 27 aufweist, durch die der Halteabschnitt 21 mit seinem Haken 23 hindurch tritt und somit die Blende 26 durchsetzt. Die Blende 26 liegt mit Abstand zum Rohbauabschnitt 4 und ist ausschließlich an dem Innenverkleidungsteil 16 befestigt, wofür zumindest ein weiter unten beschriebenes Hintergriffselement 28 (Fig. 6) vorgesehen ist.

Die Blende 26 besitzt ein Mittelstück 29, das ähnlich einer Kalotte 30 bzw. einer Schale ausgeführt ist. In der Kalotte 30 ist die Durchgangsöffnung 27 etwa rechteckförmig ausgebildet. Umgeben wird die Kalotte 30 von einem Randstreifen 31, der leicht abgebogen von der Kalotte 30 ausgeführt ist. Die Kalotte 30 ist also gegenüber dem Innenverkleidungsteil 16 zurück versetzt und der Randstreifen 31 schließt mit dem den Durchbruch 25 umgebenden Rand 32 am Innenverkleidungsteil 16 ab. Dadurch liegt der Haken 23 zumindest größtenteils innerhalb der Kalotte 30.

Befestigt wird die Blende 26 durch das zumindest eine Hintergriffselement 28, das an der der Seite 19 zugewandten Rückseite 33 der Blende 26 vorzugsweise einstückig mit dieser ausgeführt ist. Das Hintergriffselement 28 hintergreift mit einer Nase 34 den Rand 32 des Innenverkleidungsteils 16. Das Hintergriffselement 28 kann aus demselben Material wie die übrige Blende 26 hergestellt sein. Es kann aber auch ein anderer Kunststoff verwendet werden. Es können mehrere Hintergriffselement 28 an der Rückseite 33 verteilt angeordnet sein. Außerdem ist randseitig an der Rückseite 33 ein Aufnahmeabschnitt 35 ausgebildet, der kanalartig ausgeführt und zumindest abschnittweise an dem Randstreifen 31 entlang verlaufend ausgeführt ist. Dieser Aufnahmeabschnitt 35 wird gebildet von einem von der Rückseite 33 entspringenden Steg 36, der zusammen mit dem Randstreifen 31 den Kanal definiert. Mit diesem Aufnahmeabschnitt 35 wird die Blende 26 auf den Rand 32 des Innenverkleidungsteils 16 aufgesteckt, was in Fig. 2 deutlich zu sehen ist. Zusätzlich können an der Rückseite 33 der Blende 26 noch Verhakungen 26' vorgesehen sein, die an dem Innenverkleidungsteil 16 eingehängt werden.

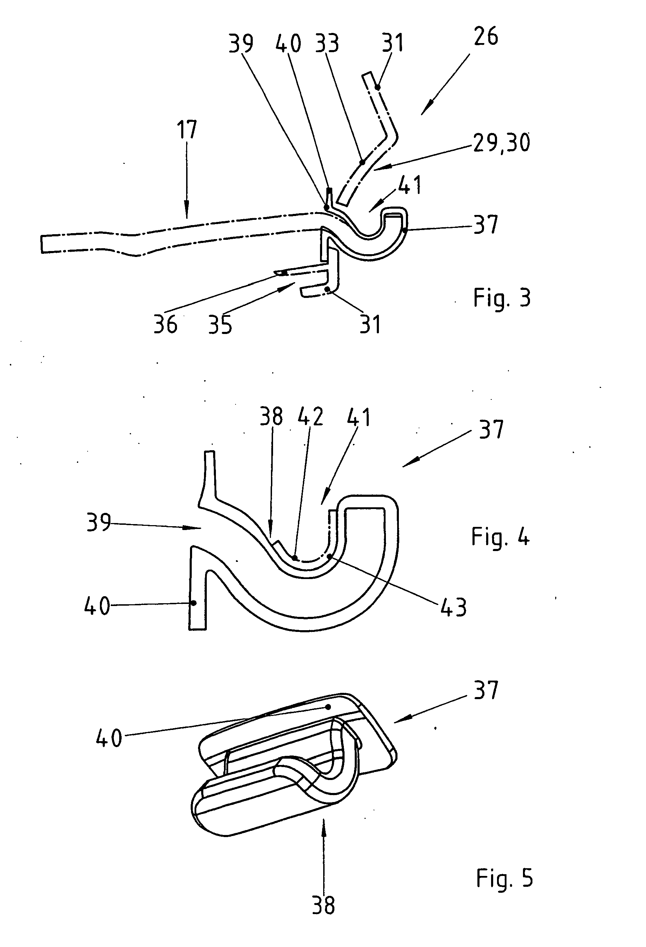

Auf den Haken 23 ist eine Abdeckung in Form eines als auf den Haken 23 aufsteckbares Aufsteckteil 37 aufgebracht, welches ein den Haken 23 vollständig umgebenden Hakenformteil 38 ausweist, das mit einer Einstecköffnung 39 ausgestattet ist, die von einem vorzugsweise umlaufenden Kragen 40 umgeben ist. Wie aus den Fig. 2 und 3 ersichtlich, liegt der Kragen 40 an der Rückseite 33 der Blende 26 und hintergreift diese somit.

Das Hakenformteil 38 ist an die Form des Hakens 23 angepasst und bildet quasi eine Haut auf dem Haken 23. In einem Auflagebereich 41 für die Öse 24 kann das Aufsteckteil 37 an seinem Hakenformteil 38 eine Verstärkung 42 (Fig. 4) aufweisen, die einstückig mit dem Aufsteckteil 37 oder als zusätzlich aufgebrachte Schicht 43, vorzugsweise aus demselben Material des Aufsteckteils 37, vorgesehen sein kann.

Sowohl das Aufsteckteil 37 als auch die Blende 26 verkleiden das Beschlagteil 17 und sind aus einem elastischen Kunststoff hergestellt. Für das Aufsteckteil 37 bzw. die Verstärkung 42 ist ein thermoplastisches Elastomer mit einer Härte von ca. 87±5 Shore A vorgesehen, das unter dem Namen Santoprene® bekannt ist. Für die Blende 26 wird vorzugsweise ein Elastomer, insbesondere EPDM, verwendet. Ggf. kann die Blende 26 auch als Zwei-Komponenten-Teil realisiert sein. Beispielsweise könnte das Hintergriffselement 28 und/oder der Randstreifen 31 und/oder die Kalotten 30 und oder der Steg 36 aus einem anderen Kunststoff, beispielsweise Polypropylen, gefertigt sein.

## Patentansprüche

1. Kraftfahrzeug (1) mit einem Rohbauabschnitt (4), einem den Rohbauabschnitt (4) abdeckenden Innenverkleidungsteil (16) und mit einer Befestigungseinrichtung (12) für ein Trenn- bzw. Rückhalteelement (11), insbesondere Gepäckgitter, welche Befestigungseinrichtung (12) ein am Rohbauabschnitt (4) befestigtes Beschlagteil (17) mit einem Befestigungsabschnitt (18) und einem Halteabschnitt (21) aufweist, welches Innenverkleidungsteil (16) einen Durchbruch (25) aufweist, in den eine Blende (26) eingesetzt ist, die von dem Halteabschnitt (21) durchsetzt wird, wobei die Blende (26) ausschließlich an dem Innenverkleidungsteil (16) gehalten ist, wobei die Blende (26) mit Abstand zum Rohbauabschnitt (4) liegt, und wobei zwischen dem als Haken (23) realisierten Halteabschnitt (21) und dem Befestigungsabschnitt ein Verlängerungsabschnitt (20) ausgebildet ist, **dadurch gekennzeichnet, dass** der Haken (23) mit einer als Aufsteckteil (37) ausgebildeten Abdeckung aus Kunststoff versehen ist, die zusammen mit der Blende (26) die Befestigungseinrichtung (12) verkleidet.

2. Kraftfahrzeug nach Anspruch 1, **dadurch gekennzeichnet, dass** das Aufsteckteil (37) aus einem elastischen Kunststoff, insbesondere aus einem thermoplastischen Elastomer, hergestellt ist.

3. Kraftfahrzeug nach Anspruch 1, **dadurch gekennzeichnet, dass** die Blende (26) aus einem elastischen Kunststoff, insbesondere einem Elastomer und/oder Polypropylen hergestellt ist.

4. Kraftfahrzeug nach einem der vorhergehenden Ansprüche, **dadurch gekennzeichnet, dass** die Blende (26) zumindest ein Hintergriffselement (28) für die Befestigung an dem Innenverkleidungsteil (16) aufweist.

5. Kraftfahrzeug nach Anspruch 1, **dadurch gekennzeichnet, dass** die Blende (26) randseitig zumindest einen Aufnahmeabschnitt (35) besitzt, der auf einen den Durchbruch (25) begrenzenden Rand (32) des Innenverkleidungsteils (16) aufgesteckt ist.

6. Kraftfahrzeug nach einem der vorhergehenden Ansprüche, **dadurch gekennzeichnet, dass** die Blende (26) ein als Kalotte (30) ausgebildetes Mittelstück (29) aufweist, das von einem Randstreifen (31) umgeben ist, und dass die Kalotte (30) eine Durchgangsöffnung (27) für den Haken (23) aufweist.

7. Kraftfahrzeug nach einem der vorhergehenden Ansprüche, **dadurch gekennzeichnet, dass** die das Aufsteckteil (37) einen Kragen (40) aufweist, der die Blende (26) hintergreift.

8. Kraftfahrzeug nach einem der vorhergehenden Ansprüche, **dadurch gekennzeichnet, dass** das Aufsteckteil (37) in einem Auflagebereich (41) eine Verstärkung (42) aufweist.

## Claims

1. A motor vehicle (1) having a body shell section (4), an interior trim part (16) covering the body shell section (4) and having an attachment device (12) for a separating or retaining element (11), in particular a luggage grille, which attachment device (12) exhibits a mounting part (17) secured to the body shell section (4) with an attachment section (18) and a holding section (21), which interior trim part (16) exhibits a hole (25), into which a cover (26) is inserted, through which the holding section (21) passes, the cover (26) being attached exclusively to the interior trim part (16), the cover (26) lying at a distance from the body shell section (4), and an extension section (20) being executed between the holding section (21) realized as a hook (23) and the attachment section, **characterized in that** the hook (23) is provided with a covering made of plastic executed as a push-on part (37), which together with the cover (26) conceals the attachment device (12).

2. The motor vehicle as claimed in claim 1, **characterized in that** the push-on part (37) is manufactured from an elastic plastic, in particular from a thermoplastic elastomer.

3. The motor vehicle as claimed in claim 1, **characterized in that** the cover (26) is manufactured from an elastic plastic, in particular an elastomer and/or polypropylene.

4. The motor vehicle as claimed in one of the preceding claims, **characterized in that** the cover (26) exhibits at least one element (28) gripping from the rear for its attachment to the interior trim part (16) .

5. The motor vehicle as claimed in claim 1, **characterized in that** the cover (26) possesses at least one receiving section (35) arranged peripherally, which is pushed onto an edge (32) of the interior trim part (16) delimiting the hole (25).

6. The motor vehicle as claimed in one of the preceding claims, **characterized in that** the cover (26) exhibits a middle piece (29) executed as a roof section (30), which roof section is surrounded by an edge strip (31), and **in that** the roof section (30) exhibits a transcurrent opening (27) for the hook (23).

7. The motor vehicle as claimed in one of the preceding claims, **characterized in that** the push-on part (37) exhibits a collar (40), which engages with the cover (26) from behind.

8. The motor vehicle as claimed in one of the preceding claims, **characterized in that** the push-on part (37) exhibits a reinforcement (42) in an application area (41).

## Revendications

1. Véhicule automobile (1) doté d'une partie structurelle brute (4), d'une pièce (16) d'habillage intérieur qui recouvre la partie structurelle brute (4) et d'un dispositif de fixation (12) d'un élément (11) de séparation ou de retenue, en particulier d'une grille à bagages, lequel dispositif de fixation (12) présente une pièce de ferrure (17) fixée sur la partie structurelle brute (4) et dotée d'une partie de fixation (18) et d'une partie de retenue (21), laquelle pièce (16) d'habillage intérieur présentant une perforation (25) dans laquelle est inséré un écran (26) traversé par la partie de maintien (21), l'écran (26) étant maintenu exclusivement sur la pièce (16) d'habillage intérieur, l'écran (26) étant situé à distance de la partie structurelle brute (4), une partie de prolongement (20) étant formée entre la partie de fixation et la partie de maintien (21) configurée comme crochet (23),
**caractérisé en ce que**
le crochet (23) est doté d'un recouvrement en matière synthétique configuré comme pièce enfichable (37), qui recouvre le dispositif de fixation (12) en même temps que l'écran (26).

2. Véhicule automobile selon la revendication 1, **caractérisé en ce que** la pièce enfichable (37) est réalisée en une matière synthétique élastique et en particulier en un élastomère thermoplastique.

3. Véhicule automobile selon la revendication 1, **caractérisé en ce que** l'écran (26) est fabriqué en matière synthétique élastique, en particulier un élastomère et/ou le polypropylène.

4. Véhicule automobile selon l'une des revendications précédentes, **caractérisé en ce que** l'écran (26) présente au moins un élément (28) d'accrochage par l'arrière qui permet de le fixer sur la pièce (16) d'habillage intérieur.

5. Véhicule automobile selon la revendication 1, **caractérisé en ce que** l'écran (26) possède sur son bord au moins une partie de réception (35) enfichée sur un bord (32) de la pièce (16) d'habillage intérieur qui délimite la perforation (25).

6. Véhicule automobile selon l'une des revendications précédentes, **caractérisé en ce que** l'écran (26) présente une pièce centrale (29) configurée comme calotte (30) et entourée par une bande de bord (31) et **en ce que** la calotte (30) présente une ouverture de passage (27) pour le crochet (23).

7. Véhicule automobile selon l'une des revendications précédentes, **caractérisé en ce que** la pièce enfichable (37) présente un collet (40) qui accroche l'écran (26) par l'arrière.

8. Véhicule automobile selon l'une des revendications précédentes, **caractérisé en ce que** la pièce enfichable (37) présente un renfort (42) dans une zone de pose (41).
